# EUROPEAN PATENT SPECIFICATION

(11) **EP 1 219 334 B1**
(45) Date of publication and mention of the grant of the patent: **24.05.2006**
(21) Application number: 01129473.3
(22) Date of filing: 11.12.2001
(51) Int. Cl.: B01D 29/31

(54) **Back-flushable liquid static filtration apparatus**
Rückspülbarer Flüssigkeitsfilter
Filtre à liquide de contre-rinsage

(30) Priority: 21.12.2000 IT PR000069
(43) Date of publication of application: 03.07.2002
(73) Proprietor: Allegri Geom. Primo S.r.l., 43100 Parma (IT)
(72) Inventor: Allegri, Primo, 43014 Medesano (Parma) (IT)
(74) Representative: Guareschi, Antonella

(56) References cited:
- EP-A- 0 908 213
- DE-A- 3 902 829
- DE-A- 3 905 113

## Description

It is an object of the present invention an apparatus for the static filtration of liquids.

Apparatuses for the static filtration of liquids are already known, one of these apparatuses is described in patent WO 90/08587. The apparatus of this type is provided with a square, rectangular, or circular tank having a closed flat bottom.

The tank is separated by straight or circular filter walls in compartments for charging liquid to be filtered and in compartments for discharging filtered liquid, the charging and discharging compartments are alternatively arranged and each compartment is sealed.

In the apparatus disclosed in the above mentioned patent, all the tanks have the same filtered liquid level which depends on the height of overflow weirs. The weir height is about two third the height of the filter walls for reducing the strength and cost of the structure supporting the filter panel because a small difference between the levels of a discharging tank and a charging tank respectively reduces the water thrust just to that difference.

A vertical suction equipment as high as the filter panel, removes the sludge, for this reason said equipment must be submersed as much as possible in the liquid in order to suction sludge containing the least amount of water.

Suctioning of air and water to be filtered is disadvantageous for the sludge concentration.

The level difference between the liquid to be filtered and the filtered liquid for thrusting the liquid through the filter panels could be substantially less than one third the wall level, the filtered liquid level being at two thirds.

Obviously the smaller the difference between the two levels is the smaller the filtration pressure is and consequently the smaller the filtered volumes for unitary surface area.

Moreover, said height is not constant, as in the filtered liquid tanks but varies in dependence to the permeability or clogging of the screen of the filter panel.

For this reason, the apparatus of the above mentioned patent requires a level probe both for the charging and discharging tanks.

In addition, each filter wall has two cleaning vertical devices as high as the filter walls and respectively located on each side of the filter wall.

One of said devices is located on the side containing the filtered water and sprays water to wash the filter walls in a counterflow way with respect to the filtration flow, the other device, located in the tank containing the liquid to be filtered, has the capacity of removing the sludge trapped in the wall by suction.

The sludge must be removed on a wall by wall basis because the tanks are not provided with sludge collecting bottom hoppers.

Finally, the above described apparatus has the following disadvantages:
- The apparatus is expensive since it is necessary the presence of two cleaning devices and their respective driving units;
- During the operation, the apparatus should be submersed as much as possible in order to minimize the suction of air that is noxious to sludge;
- The suctioned mixture is still aerated and contains low concentrated sludge because the apparatus suctions sludge with liquid still to be filtered coming from a number of areas where the filter screen bends between locations where it is fixed to the support device.

A great quantity of water enters those areas where the screen does not adhere to the cleaning apparatus.

The same applicant had already solved the above described disadvantages by an apparatus disclosed in the Italian patent N° 1.296.402 (EP-A-0908213); the apparatus was provided with a square or rectangular tank with hopper-shaped bottom where sludge is collected that does not require a device for suctioning this sludge.

In addition to that, the apparatus comprises rectilinear filter panels, each panel being provided with two spaced apart filter walls defining a chamber which receives the filtered liquid that will be collected and conveyed outside the apparatus.

The hopper-shaped discharging bottom, since it is separated from the filtered liquid, allows a mechanic or pump discharge without air and achieves greater sludge concentration in that the sludge get denser since it remains on the bottom for several hours.

In this kind of apparatus the liquid to be filtered was distributed with the same level in a plurality of tanks.

The level of the filtered liquid inside each panel is always very shallow, ranging from zero to a few centimetres, because the bottom is provided with a discharge conduit continuously conveying the liquid to a manifold at a lower level.

The liquid to be filtered in the tank containing the panels is at the same level of few ten centimetres from the panel bottom.

That level, due to the reduced permeability of the filter panel screens, increases with the time to the maximum, at which point a device inside the panels is started by a probe located inside the tank, for cleaning by a counterflow flushing the screens.

The sludge trapped in the filter walls outside the panels drops due to the counterflow flushing action, on the hopper bottom and gets denser after some hours and then is extracted by mechanical means, such as a screw conveyor or pump.

This apparatus does not require suction devices having high running costs.

The object of this invention is to further improve the already efficient apparatus disclosed in patent N° 1.296.402 (EP-A-0908213) of the same applicant.

The improvements that will better described in the following specification consist of reducing the size or increasing the filter surface with the same size of the receiving tank.

Another advantage achieved is the reduction of the costs of the structures supporting the walls formed by the filter screens and of the flushing apparatus for said filter walls.

The panel structures supporting the filter screens are subjected to tensile stresses, on a concave face with respect to the liquid to be filtered, and to compression stresses on the other convex face with respect to the liquid to be filtered in comparison with the prior art apparatuses which are subjected to bending stresses.

These objects and advantages are fully met by the liquid static filtration apparatus according to the present invention, which is characterized by the claims attached.

These and other characteristics will be better understood by the following description of a preferred embodiment shown in an illustrative nonlimiting way in the attendant drawings, wherein:
- figure 1 is a top plan view of the apparatus,
- figure 2 is a cross-sectional elevation view of the apparatus sectioned along line I-I of figure 1,
- figure 3 is a top plan view of second embodiment,
- figure 4 is an elevation view of the preceding embodiment sectioned along line III-III of figure 3.

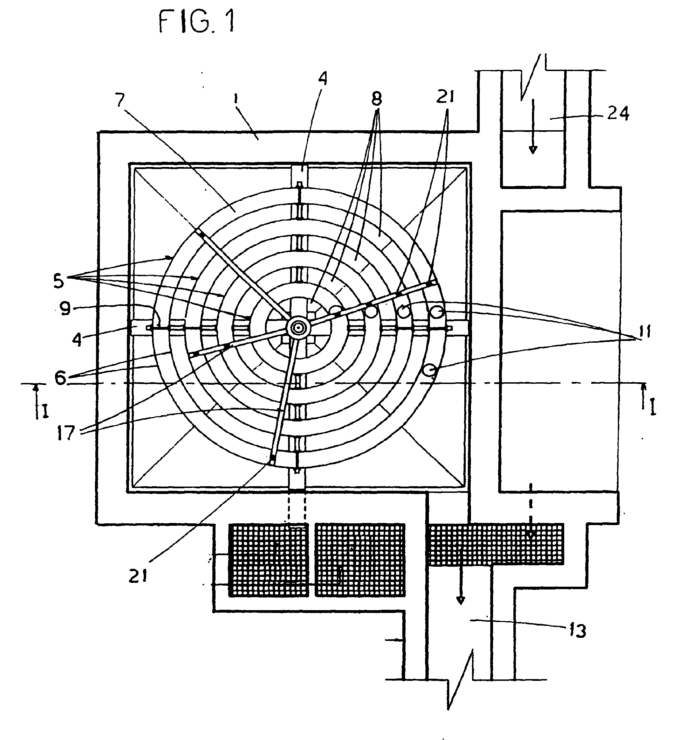

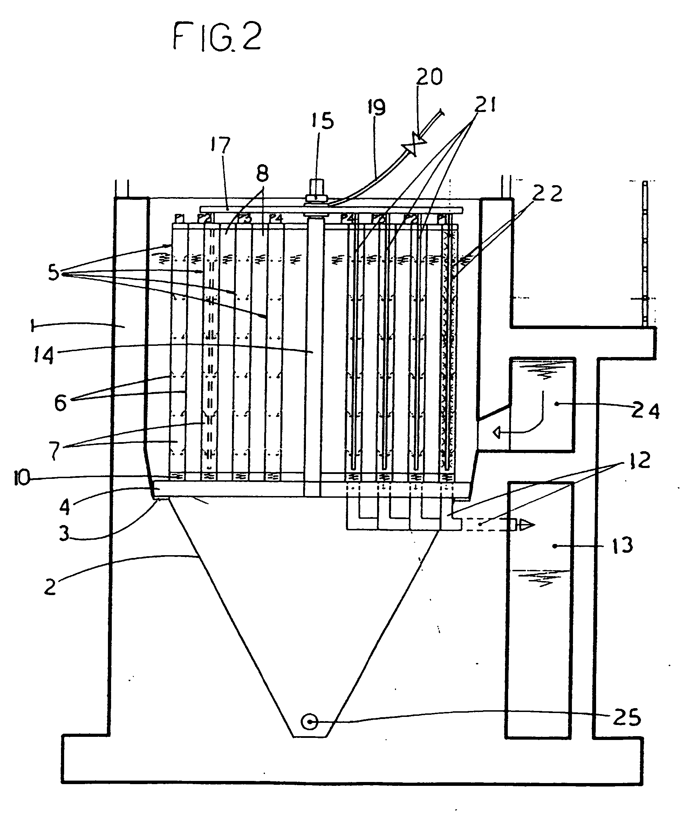

Referring to figures 1 and 2, number 1 shows a generally square section tank preferably made of reinforced concrete.

The bottom 2 of the tank has a frusto-pyramidal shape that collects sludge resulting from a depuration.

At the base of the frusto-pyramidal bottom there is a step 3 on which a metal frame 4 formed by a spider rests. Cylindrical filter panels 5, four in the example shown, are located on the frame. The cylindrical panels are spaced apart in order to form chambers 8 collecting a liquid to be filtered.

The cylindrical panels are concentric and each of them is formed by two spaced apart walls 6 defining a space 7 for collecting the filtered liquid. The walls 6 are formed by filter screens. In the example shown in figures 1 and 2, the walls are parallel to each other so that space 7 width is constant. The two walls 6 are kept at a distance for forming said space 7, by a metal frame 9. Each space 7 has a metal sheet closed bottom 10 provided by the frame 9 so that each space 7 is completely isolated by the area containing the water to be filtered.

A bore 11 is provided on each closed bottom 10, the bore being connected through a drainage conduit 12 to a conduit 13 for collecting the filtered liquid.

A post 14 is connected to the metal frame 4 in the spider centre. A wheel 15 provided with a driving unit 16, is mounted on the top of post 14. The wheel rotational axis is coaxial to the vertical axis of the concentric panels 5.

The wheel 15 supports one or more manifolds 17 (four in the example shown) fed by a distributor 18 of clean or filtered water on the fifth wheel and supplied by a conduit 19 closed by a valve 20.

Clean or filtered water can be also supplied from the bottom through the metal frame 4 and the post 14 which should be formed of tubular elements.

Each manifold 17 is provided with a vertical flushing column 21 inserted into at least one of the filtered water collecting spaces 7 and extending to the floor of the same space adjacent to the sheet closed bottom 10. Each flushing column is provided with a plurality of nozzles 22 arranged in two opposed vertical rows in order to act at the same time against the two filter walls 6 forming the panel.

Particularly, spaces 7 of greater diameters receive several vertical flushing columns 21 supported and fed through different manifolds.

The nozzle flow is opposite to the purified water flow.

A safety level meter 23 for the water to be filtered is located at the highest level said water can reach before entering the purified water collecting spaces.

The water to be filtered is fed to the tank 1 through the supplying channel 24. After the liquid to be filtered has reached the level meter 23, the driving unit will be started and the pump 20 will be opened in order to initiate the counterflow flushing operation of the filter walls. The flushing water will partially remain in spaces 7 and partially flow through the filter screens dropping the sludge into the frusto-conical collecting bottom.

The flushing operation is not stopped by the filtration process.

The sludge consolidating in the frusto-pyramidal bottom, is taken out through a sludge extraction bore 25 by an auger, a suitable pump, or other known conveying means.

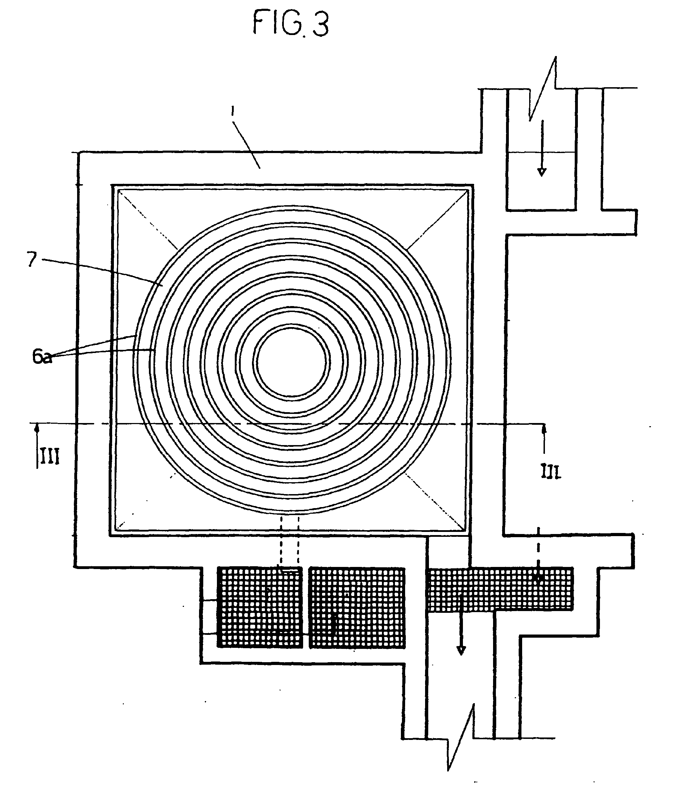

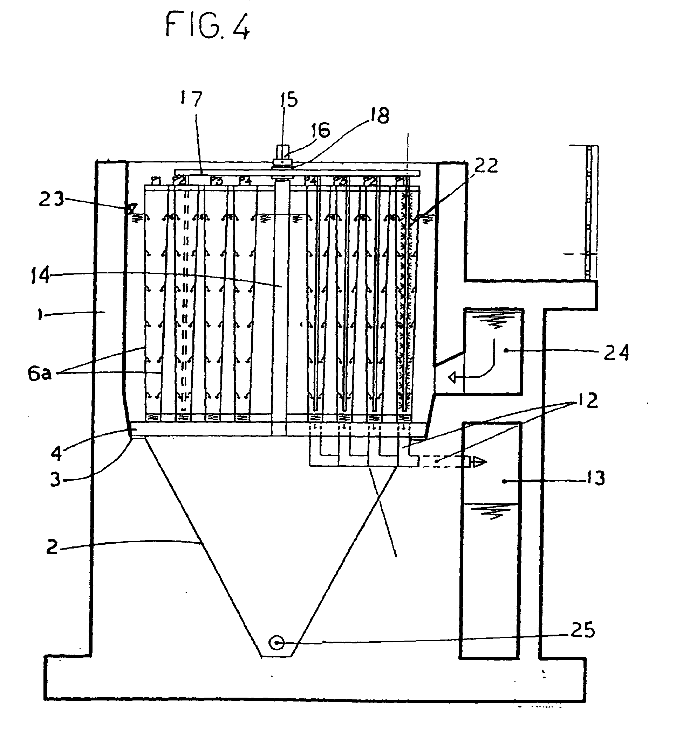

According to another embodiment shown in figures 3 and 4, the two filter panel walls 6a are not parallel but converge to the bottom so that the distance of the flushing nozzles to the filter walls is smaller in the bottom area where sludge is highly concentrated.

The operation of the flushing apparatus can be cyclically or continuously programmed since it does not interrupt the filtration process.

Every cylindrical panel can be unitary or can be made up of sections.

Further, according to another embodiment (not shown), it is provided, in cooperation with the flushing apparatus, an air blowing apparatus for cleaning the filter walls which promotes the cleaning step after the operation of the flushing apparatus. The blowing apparatus is substantially the same of the flushing apparatus and it is provided with vertical columns which are insertable and movable in said spaces 7.

Particularly, the compressed air cleaning cycle must be preferably, but not exclusively, performed when the level of the liquid to be filtered is too shallow, for example during the night when the flow rate of the inflowing liquids to be filtered is too low or substantially zero.

The filtration apparatuses for high flow rates can be made with rectangular tanks receiving many assemblies of concentric filter panels.

The above mentioned apparatus attains the following advantages:
- a greater filtration surface (more than 50-60%) under the same tank volume;
- a greater effective surface of the filter walls under the same size due to the smaller vertical dimension of the filter screen supporting structures;
- greater space available between the filter walls because the supporting structures are thinner;
- an unlimited number of vertical nozzle columns can be sandwiched between the filter walls thanks to the rotary movement of the manifolds. This approach allows to adjust the flushing capacity and to relate it to the surface of each filter wall also after the first installation without eliminating old components just adding new vertical columns;
- the supporting structures of the filter walls are less expensive because thanks to their circular shape they are subjected to tensile or compression stress but not to a bending stress.
- the filter walls of the flushing apparatus are less expensive since the rotational movement is simpler and less expensive to obtain.

Thanks to the arrangement of the apparatus, the filtration process and consequently the operation are never stopped even with the extraordinary service making unnecessary the presence of a redundant apparatus.

## Claims

1. Liquid static filtration apparatus comprising a tank (1) provided with a channel (24) adapted to convey a liquid to be filtered and a conduit (12) adapted to discharge the filtered liquid, said channel and conduit being on different levels, the channel (24) being higher than the conduit (12) and said tank being down closed by a frusto-pyramidal bottom (2) containing sludge extracting means,
a plurality of cylindrical or frusto-conical panels inside the tank (1) and spaced from its bottom, said panels being spaced apart in order to form chambers (8) receiving the liquid to be filtered, each panel being formed by two walls (6), made up of filter screens, the walls (6) being spaced apart in order to form a space (7) receiving the filtered liquid flowing to the conduit (12);
a driven wheel (15) on the tank (1) whose rotational axis is coaxial to the vertical axis of the filter panels, said driven wheel supporting one or more manifolds (17) fed by a distributor of clean or filtered water, every manifold has one or more vertical columns (21) adapted to be inserted in spaces (7) and provided with a plurality of nozzles (22) arranged in at least two opposed rows, the nozzles action being opposite to the flow of the liquid to be filtered.

2. Apparatus according to claim 1, **characterized in that** the filter walls (6) forming a panel are parallel to each other.

3. Apparatus according to claim 1, **characterized in that** the filter wall (6a) forming a panel converge downwards so that the distance between the flushing nozzles and the filter walls is smaller in the lower area of the tank where the sludge concentration is higher.

4. Apparatus according to claim 1, **characterized in that** it comprises a spider frame located in the top part of the frusto-pyramidal bottom, the concentric filter panels resting on said frame and a post (14) supporting the wheel (15) at its top.

5. Apparatus according to claim 1, **characterized in that** it comprises vertical compressed air blowing columns in cooperation with the vertical flushing columns inserted in spaces (7), said vertical compressed air blowing columns being movable inside said spaces.

## Patentansprüche

1. Apparat zur statischen Filterung von Flüssigkeiten, umfassend ein Becken (1) mit einem Kanal (24) zum Fördern von Filterflüssigkeit und mit einer Leitung (12) zum Abführen der gefilterten Flüssigkeit, wobei der genannte Kanal und die genannte Leitung auf verschiedenen Niveaus angeordnet sind, der Kanal (24) höher als die Leitung (12) ist, und das genannte Becken unterseitig von einem kegelstumpfförmigen Boden (2) verschlossen wird, welcher Schlammabzugsmittel enthält, eine Vielzahl von zylinderförmigen oder kegelstumpfförmigen Paneelen im Inneren des Beckens (1), die im Abstand von dessen Boden angeordnet sind, wobei die genannten Paneele zur Ausbildung von die Filterflüssigkeit aufnehmenden Kammern (8) voneinander beabstandet sind, jedes Paneel aus zwei aus Filtersieben gebildeten Wänden (6) besteht, wobei die Wände (6) zur Bildung eines Raumes (7) voneinander beabstandet sind, in den die gefilterte, in der Leitung (12) strömende Flüssigkeit tritt;
ein auf dem Becken (1) angeordnetes angetriebenes Rad (15), dessen Rotationsachse koaxial zu der senkrechten Achse der Filterpaneele ist, wobei das angetriebene Rad eine oder mehrere Sammelleitungen (17) trägt, die von einem Verteiler für frisches oder gefiltertes Wasser versorgt werden, wobei jede Sammelleitung eine oder mehrere senkrechte Säulen (21) aufweist, welche in die Räume (7) eingebracht werden und eine Vielzahl von in mindestens zwei einander gegenüberliegenden Reihen angeordneten Düsen (22) aufweisen, wobei die Düsen entgegengesetzt zu der Strömung der Filterflüssigkeit wirken.

2. Apparat nach Anspruch 1, **dadurch gekennzeichnet, dass** die ein Paneel bildenden Filterwände (6) parallel zueinander angeordnet sind.

3. Apparat nach Anspruch 1, **dadurch gekennzeichnet, dass** die ein Paneel bildenden Filterwände (6a) in Abwärtsrichtung konvergieren, so dass der Abstand der Spüldüsen von den Filterwänden im unteren Bereich des Beckens geringer ist, wo die Schlammkonzentration höher ist.

4. Apparat nach Anspruch 1, **dadurch gekennzeichnet, dass** er einen strahlkranzförmigen, in dem oberen Bereich des kegelstumpfförmigen Bodens angeordneten Rahmen umfasst, der die konzentrischen Filterpaneele trägt, sowie auf der Oberseite einen das Rad (15) tragenden Ständer (14).

5. Apparat nach Anspruch 1, **dadurch gekennzeichnet, dass** er senkrechte, mit den senkrechten Spülsäulen zusammenarbeitende Druckluftblassäulen umfasst, die in Räume (7) eingebracht werden, wobei die senkrechten Druckluftblasvorrichtungen in diesen Räumen (7) bewegbar sind.

## Revendications

1. Appareil de filtration statique de liquides comprenant un réservoir (1) pourvu d'un canal (24) adapté au convoyage d'un liquide à filtrer et d'un conduit (12) adapté à l'évacuation du liquide filtré, lesdits canal et conduit se trouvant sur des niveaux différents, le canal (24) étant supérieur au conduit (12) et ledit réservoir étant fermé en bas par un fond en tronc de pyramide (2) contenant des moyens d'extraction des dépôts,
une pluralité de panneaux cylindriques ou en tronc de cône à l'intérieur du réservoir (1) et espacés de son fond, lesdits panneaux étant espacés entre eux de manière à former des chambres (8) recevant le liquide à filtrer, chaque panneau étant formé de deux parois (6), constituées d'écran filtrants, les parois (6) étant espacées entre elles de manière à former un espace (7) recevant le liquide filtré s'écoulant vers le conduit (12),
une roue motorisée (15) sur le réservoir dont l'axe de rotation est coaxial à l'axe vertical des panneaux filtrants, ladite roue motorisée supportant un ou plusieurs collecteurs (17) alimentés par un distributeur d'eau propre ou filtrée, chaque collecteur étant pourvu d'une ou plusieurs colonnes verticales (21) adaptées à être insérées dans les espaces (7) et pourvues d'une pluralité de buses (22) disposées en au moins deux files opposées, l'action des buses étant opposée au flux de liquide à filtrer.

2. Appareil selon la revendication 1, **caractérisé en ce que** les parois du filtre (6) formant un panneau sont parallèles entre elles.

3. Appareil selon la revendication 1, **caractérisé en ce que** la paroi du filtre (6a) formant un panneau converge vers le bas de manière à ce que la distance entre les buses de rinçage et les parois du filtre est inférieure dans la zone basse du réservoir où la concentration de dépôts est supérieure.

4. Appareil selon la revendication 1, **caractérisé en ce qu'**il comprend un châssis en araignée situé sur la partie supérieure du fond en tronc de pyramide, les panneaux filtrants concentriques reposant sur ledit châssis et un arbre (14) supportant la roue (15) sur son sommet.

5. Appareil selon la revendication 1, **caractérisé en ce qu'**il comprend des colonnes verticales de soufflage d'air comprimé associées aux colonnes verticales de rinçage insérées dans les espaces (7), lesdites colonnes verticales de soufflage d'air comprimé étant mobiles à l'intérieur desdits espaces.
